# EUROPÄISCHE PATENTSCHRIFT

(11) **EP 2 994 409 B1**
(45) Veröffentlichungstag und Bekanntmachung des Hinweises auf die Patenterteilung: **08.11.2017**
(21) Anmeldenummer: 14716764.7
(22) Anmeldetag: 11.03.2014
(51) Int. Cl.: B66C 23/80, B60S 9/12, B66C 23/88, B66C 23/90

(54) **VORRICHTUNG ZUM ABSTÜTZEN EINER MOBILEN VORRICHTUNG AM BODEN**
DEVICE FOR SUPPORTING A MOBILE DEVICE ON THE GROUND
DISPOSITIF PERMETTANT DE STABILISER UN DISPOSITIF MOBILE AU SOL

(30) Priorität: 08.05.2013 DE 102013007869
(43) Veröffentlichungstag der Anmeldung: 16.03.2016
(73) Patentinhaber: Schwing GmbH, 44653 Herne (DE)
(72) Erfinder: VIERKOTTEN, Reiner, 46145 Oberhausen (DE); CONRAD, Carsten, 45661 Recklinghausen (DE); GLAWE, Ulrich, 58285 Gevelsberg (DE); TEBEEK, Wolfgang, 45768 Marl (DE); MERTEN, Wolfgang, 58456 Witten (DE); OLEKSYUK, Mykola, 45527 Hattingen (DE)
(74) Vertreter: Behrendt, Arne
(86) Internationale Anmeldenummer: PCT/EP2014/054677
(87) Internationale Veröffentlichungsnummer: WO 2014/180589

(56) Entgegenhaltungen:
- WO-A1-98/28219
- US-A1- 2002 020 231

## Beschreibung

Die Erfindung betrifft eine Abstützvorrichtung zum Abstützen einer mobilen Vorrichtung, insbesondere eines Fahrzeugs, am Boden.

Viele Nutzfahrzeuge, z.B. fahrbare Betonpumpen, müssen bei bestimmten Arbeiten am Boden abgestützt werden. Bei Straßenarbeiten, Fassadenarbeiten, Baumarbeiten oder sonstige Arbeiten, die mittels eines Auslegerarms oder Krans durchgeführt werden, kann das Nutzfahrzeug umkippen. Ein Pumpenmast oder ein Kranarm erzeugt im ausgeschwenkten Zustand ein hohes Kippmoment, vor allem wenn er mit Personen oder Lasten beladen ist. Eine Abstützung des Nutzfahrzeugs erfolgt in solchen Fällen meist durch Abstützvorrichtungen in Form von seitlich ausfahrbaren Stützen, in denen absenkbare Stützfüße vorgesehen sind, die den Kontakt zum Boden herstellen. Das Ausfahren und Absenken kann dabei z.B. hydraulisch erfolgen. Um die Standsicherheit der Abstützung insbesondere bei einer Teilabstützung nach der Norm DIN EN 12001:2012-11; Kapitel 5.2.10.4.2 sicherstellen zu können, muss zumindest festgestellt werden, ob alle Stützen Bodenkontakt haben, bevor ein Ausleger in Betrieb genommen werden darf.

Die US 6,655,219 zeigt ein Federelement im Stützfuß einer Abstützung, welches verwendet wird, die Stützlast zu detektieren. Für diesen Zweck befindet sich an dem Federelement ein Dehnmessstreifen, der mit einer Auswertungselektronik verbunden ist.

Die WO 98/28219 A1 offenbart eine Abstützvorrichtung zum Abstützen eines Fahrzeugs am Boden mit einer Sensoreinrichtung, die ein stützlastabhängiges Signal erzeugt.

Aufgabe der Erfindung ist, eine Vorrichtung zum Abstützen eines Fahrzeugs oder einer mobilen Vorrichtung am Boden bereitzustellen, mit einer deutlich vereinfachten Sensoreinrichtung, womit ein sicherer Betrieb des Fahrzeugs in einem immobilen Zustand sichergestellt werden kann, insbesondere bei Betrieb eines Auslegerarms des Fahrzeugs, welcher zu Kippmomenten führt.

Diese Aufgabe wird durch eine Vorrichtung gemäß Anspruch 1 gelöst.

Vorteilhafte Weiterbildungen der Erfindung sind in den Unteransprüchen angegeben.

Die Erfindung geht aus von einer Abstützvorrichtung zum Abstützen einer mobilen Vorrichtung, insbesondere eines Fahrzeugs, am Boden, mit
- einer mit der mobilen Vorrichtung verbundenen Stütze,
- einem an der Stütze gelagerten Hydraulikzylinder, der relativ zu der Stütze zwischen einer oberen und einer unteren Endlage verlagerbar ist,
- einem mittels des Hydraulikzylinders absenk- und anhebbaren Stützfuß, und
- einer Sensoreinrichtung, die ein stützlastabhängiges Signal erzeugt.

Unter einer Abstützvorrichtung wird im Sinne der Erfindung jede Vorrichtung verstanden, mittels welcher eine Stützkraft vor allem in vertikaler Richtung von einem Fahrzeug oder einer sonstigen mobilen Vorrichtung in den Boden eingeleitet werden kann. An einem Fahrzeug sind meist mindestens vier Abstützvorrichtungen vorgesehen, welche zusammen das Fahrzeug auch vollständig vom Boden abheben können und frei von einem Feder-Dämpfer-System einer Radaufhängung das Fahrzeug stützen können.

Erfindungsgemäß wird vorgeschlagen, dass die Sensoreinrichtung das stützlastabhängige Signal mittels eines Näherungsschalters erzeugt, der anspricht, wenn der Abstand des Hydraulikzylinders zu seiner oberen Endlage einen vorgegebenen Wert unter- oder überschreitet.

Mittels des vorzugsweise berührungslos arbeitenden Näherungsschalters kann auf besonders einfache und robuste Weise detektiert werden, ob auf die Abstützvorrichtung eine Stützkraft einwirkt, die einen bestimmten Schwellwert übersteigt. Nur bei einer ausreichend hohen Stützkraft ist sichergestellt, dass die mobile Vorrichtung sicher abgestützt ist. Der Schwellwert kann durch den vorgegeben Abstand, bei dem der Näherungsschalter anspricht, festgelegt werden. Der Schwellwert gibt an, welche Stützkraft mindestens vorliegen muss, damit die Gefahr eines Abhebens der Abstützvorrichtung vom Boden ausgeschlossen werden kann. Die Kraftschwelle liegt in praktischen Fällen bei Autobetonpumpen z.B. bei 300 kg. Detektiert der Näherungsschalter ein Unterschreiten des Schwellwertes, zeigt dies einen Unterlastfall und damit z.B. ein drohendes Kippen der mobilen Vorrichtung an. Das entsprechende Signal des Näherungsschalters kann genutzt werden, um ein Alarmsignal auszugeben oder um automatisch den Betrieb eines Auslegers der mobilen Vorrichtung zu unterbrechen oder um nur noch solche Bewegungen des Auslegers zuzulassen, die das Kippmoment der Maschine vermindern, d.h. lastmindernd sind. Denkbar ist es auch, auf das Signal hin automatisch den Ausleger einzufahren. Ebenso kann die Sensorik der erfindungsgemäßen Abstützvorrichtung vorteilhaft genutzt werden, um den Bodenkontakt der Stützfüße nach der Norm DIN EN 12001:2012-11 sicherzustellen, bevor der Ausleger in Betrieb genommen werden darf.

Die erfindungsgemäße Abstützung mit berührungslosem Näherungsschalter funktioniert bezüglich der Detektion des Bodenkontaktes besonders zuverlässig, insbesondere auch in schmutzigen Baustellenumgebungen. Selbst durch grobe Verschmutzung wird die Funktionsfähigkeit nicht beeinträchtigt. Gleichzeitig ist die erfindungsgemäße Lösung besonders einfach und kostengünstig realisierbar.

Gemäß der Erfindung kann der Hydraulikzylinder an einer beliebig konstruierten Stütze gelagert sein, die mit der mobilen Vorrichtung, d.h. z.B. mit dem Fahrzeugrahmen einer Autobetonpumpe, stützkraftübertragend verbunden ist.

Bei einer bevorzugten Ausgestaltung umfasst die Stütze ein Außenrohr, das sich entlang einer Mittenlängsachse erstreckt, wobei der Hydraulikzylinder innerhalb des Außenrohres verlagerbar angeordnet ist. Vorteilhaft stellt bei dieser Ausgestaltung das Außenrohr eine Führung für den verlagerbaren Hydraulikzylinder dar. Gleichzeitig schützt das Außenrohr den Hydraulikzylinder.

Bevorzugt ist der Näherungsschalter an der Stütze, z.B. am Außenrohr befestigt und spricht auf eine Annäherung einer am Hydraulikzylinder angeordneten Messmarke an. Alternativ ist es auch möglich, den Näherungsschalter am Hydraulikzylinder und die Messmarke an der Stütze bzw. am Außenrohr zu befestigen. Als Näherungsschalter eignet sich prinzipell jeder berührungslos funktionierende Näherungsschalter, der magnetisch, elektromagnetisch, induktiv, kapazitiv, optisch oder auch per Ultraschall arbeitet. Es ist aber auch möglich, nicht berührungslos arbeitende Schalter, Taster oder z.B. Rollenendschalter zu verwenden.

Bei einer bevorzugten Ausgestaltung ist der Hydraulikzylinder über einen Lagerbolzen an der Stütze gelagert, wobei der Lagerbolzen in Lagerbohrungen an der Stütze und am Zylinderkopf des Hydraulikzylinders gelagert ist.

Beispielsweise kann wenigstens eine der Lagerbohrungen als Langloch ausgebildet sein, an dem der Hydraulikzylinder entlang der Mittenlängsachse geführt ist. Hierdurch kann auf einfache und robuste Weise eine Führung des Hydraulikzylinders an der Stütze bzw. am Außenrohr und eine Längsbeweglichkeit zwischen der oberen und unteren Endlage realisiert werden. Bevorzugt ist das Langloch im Zylinderkopf des Hydraulikzylinders ausgebildet, insbesondere zentrisch in Bezug auf die Mittenlängsachse. Die Langlochenden, an denen der Lagerbolzen anschlägt, definieren die obere und die untere Endlage des Hydraulikzylinders im Außenrohr. Die Stützkraft wird über den Lagerbolzen übertragen, wenn der Lagerbolzen am Anschlag des Langlochs anliegt.

Bei einer alternativen Ausgestaltung weist der Lagerbolzen in seinen Endabschnitten, in denen er in den Lagerbohrungen an der Stütze gelagert ist, einen bezüglich der Achse des Lagerbolzens nicht rotationssymmetrischen, vorzugsweise exzentrischen Querschnitt auf. Dabei kann das Außenmaß des Lagerbolzens in den Endabschnitten in vertikaler Richtung kleiner sein als in horizontaler Richtung. Ebenso kann der Lagerbolzen in einem mittleren Abschnitt, in dem er in der Lagerbohrung am Zylinderkopf gelagert ist, einen bezüglich der Achse des Lagerbolzens nicht rotationssymmetrischen, vorzugsweise exzentrischen Querschnitt aufweisen, wobei das Außenmaß des Lagerbolzens dann in dem mittleren Abschnitt in vertikaler Richtung kleiner ist als in horizontaler Richtung. Der so ausgestaltete Lagerbolzen kann mit Vorteil in kreisrunden Lagerbohrungen am Zylinderkopf und/oder an der Stütze gelagert sein. Aufgrund der asymmetrischen Form ist das Innenmaß der Lagerbohrung in vertikaler Richtung größer als das Außenmaß des betreffenden Abschnitts des Lagerbolzens, so dass der Lagerbolzen in der jeweiligen Lagerbohrung vertikal verlagerbar ist. Die Ober- und Unterseite des asymmetrischen Querschnitts definieren die oberen und unteren Endlagen der Relativbewegung von Stütze und Hydraulikzylinder. Die Stützkraft wird über den Lagerbolzen übertragen, wenn der Lagerbolzen am oberen bzw. unteren Anschlag der Lagerbohrung anliegt. Die Abstützvorrichtung kann einer erheblichen statischen Belastung ausgesetzt sein, was zu einem hohen Anpressdruck des Lagerbolzens in der Laibung der Lagerbohrung führt. Um den Anpressdruck so gering wie möglich zu halten, kann die Außenkontur des asymmetrischen Querschnitts des Lagerbolzens mit Vorteil an die Innenkontur der Lagerbohrung in denjenigen Bereichen angepasst sein, in denen der Lagerbolzen bei abgesenktem Stützfuß an der Laibung der Lagerbohrung anliegt. Beispielsweise kann bei einer kreisrunden Lagerbohrung die Außenkontur des Lagerbolzens in dem betreffenden Bereich den selben Radius aufweisen wie die Innenkontur der Lagerbohrung.

Bei der zuvor beschriebenen asymmetrischen Ausgestaltung des Lagerbolzens in den betreffenden Lagerbereichen ist von Vorteil, wenn der Lagerbolzen in der Lagerbohrung am Zylinderkopf und/oder in den Lagerbohrungen an der Stütze verdrehsicher geführt ist. Auf diese Weise ist die vertikale Verlagerbarkeit des Hydraulikzylinders relativ zur Stütze in definierter Art und Weise gewährleistet.

Je nach Ausgestaltung der erfindungsgemäßen Abstützvorrichtung kann der Gesamthub der Verlagerung des Hydraulikzylinders relativ zur Stütze zwischen den beiden Endlagen vergleichsweise gering sein, beispielsweise kann er nur wenige Millimeter betragen. Dies beeinträchtigt die Genauigkeit und Zuverlässigkeit bei der Erzeugung des stützlastabhängigen Signals mittels des Näherungsschalters. Um dieses Problem zu umgehen, ist bei einer bevorzugten Ausgestaltung der Erfindung ein mit der Sensoreinrichtung zusammenwirkendes Getriebe vorgesehen, das den Hub der Relativbewegung von Hydraulikzylinder und Stütze verstärkt. Das Getriebe kann beispielsweise ein Hebelgetriebe sein, mit einem an der Stütze drehbar gelagerten Hebel. Der Hebel kann z.B. an einem Angriffspunkt mit dem vertikal in den Lagerbohrungen der Stütze verlagerbaren Lagerbolzen verbunden sein, wobei eine Messmarke an einem weiter als der Angriffspunkt vom Drehpunkt des Hebels entfernten Punkt des Hebels angeordnet ist. Aufgrund des längeren Hebelarms bewegt sich die Messmarke bei einer Verlagerung des Hydraulikzylinders relativ zur Stütze stärker als der Lagerbolzen. Der Näherungsschalter spricht dabei auf eine Annäherung der am Hebel angeordneten Messmarke an und detektiert somit die Bewegung zuverlässiger.

Bei einer möglichen Ausgestaltung der erfindungsgemäßen Abstützung wirkt nur die Gewichtskraft auf den Hydraulikzylinder als zum Boden hin gerichtete Kraft. Diese Kraft bewirkt beim Anheben des Stützfußes eine Absenkbewegung des Hydraulikzylinders relativ zur Stütze.

Bei einer alternativen Ausgestaltung der erfindungsgemäßen Abstützvorrichtung ist ein Federelement vorgesehen, das sich an der Stütze abstützt und eine zum Boden hin gerichtete Federkraft auf den Hydraulikzylinder ausübt. Bevorzugt ist das Federelement zwischen einem Zylinderkopf des Hydraulikzylinders und einem Außenrohrschott gelagert. Bevorzugt ist das Federelement als Druckfeder ausgebildet, wahlweise kann es auch als Zugfeder ausgebildet sein. Das Federelement ist z.B. als Spiralfeder oder als Tellerfeder ausgebildet, wobei auch mehrere Federelemente miteinander in Kombination vorgesehen sein können, sei es in Reihe und/oder in paralleler Anordnung, z.B. eine Mehrzahl gestapelter Tellerfedern oder eine Mehrzahl ineinander angeordneter Spiralfedern. Das Federelement kann z.B. aus einem metallischen Werkstoff ausgeführt sein, oder auf Basis von Kunststoff. Weiter bevorzugt sind mehrere Federelemente vorgesehen, insbesondere mindestens zwei Federelemente, welche nebeneinander oder hintereinander zwischen dem Hydraulikzylinder und dem Außenrohrschott angeordnet sind. Die Federkraft bzw. die Vorspannung des Federlementes kann einstellbar sein, um die Lastschwelle, bei der die erfindungsgemäße Bodenkontaktsensorik anspricht, variabel vorgeben zu können.

Besonders bevorzugt weist die erfindungsgemäße Abstützvorrichtung ein weiteres Federelement auf, wobei die Federelemente in einer Doppelrohrführung um die Mittenlängsachse angeordnet sind. Hierdurch kann auf einfache und robuste Weise eine Kopplung mehrerer Federelemente erfolgen. Die Federelemente können unabhängig voneinander angeordnet werden und jeweils einzeln durch eine der beiden Innenmantelflächen der Doppelrohrführung geführt werden.

Gemäß einer vorteilhaften Ausführungsform weist die Abstützvorrichtung eine weitere Sensoreinrichtung auf, die ein Signal erzeugt, wenn der Stützfuß angehoben ist. Bei herkömmlichen Abstützvorrichtungen ist zumeist eine Sensorik vorhanden, die detektiert, ob der Stützfuß angehoben ist. Das Signal dieser Sensorik kann genutzt werden, um z.B. im Fahrbetrieb des Fahrzeugs sicherzustellen, dass alle Stützfüße angehoben sind. Diese weitere Sensorik kann in das erfindungsgemäße Konzept integriert werden, um die Sicherheit weiter zu erhöhen. Wenn nämlich das (logisch invertierte) Signal der weiteren Sensoreinrichtung anzeigt, dass der Stützfuß nicht angehoben ist, bedeutet dies im Umkehrschluss, dass der Stützfuß (zumindest teilweise) abgesenkt ist. Der Betrieb eines Auslegers kann gemäß der Erfindung dann davon abhängig gemacht werden, dass das Signal des Näherungsschalters der ersten Sensoreinrichtung eine ausreichende Stützlast signalisiert und gleichzeitig das Signal der weiteren Sensoreinrichtung signalisiert, dass der Stützfuß nicht angehoben ist. Diese Redundanz erhöht die Sicherheit.

Gemäß einer vorteilhaften Ausführungsform weist die erfindungsgemäße Abstützvorrichtung eine Steuerungseinrichtung auf, welche dazu ausgebildet ist, in Abhängigkeit von dem Signal der Sensoreinrichtung einen Ausleger der mobilen Vorrichtung zu steuern. Beispielsweise kann ein Fahrzeug mit einer erfindungsgemäßen Abstützvorrichtung einen Aktuator zum Betätigen eines Auslegers aufweisen, der mit der Steuerungseinrichtung der Abstützvorrichtung gekoppelt ist. Hierdurch kann der Betrieb des Auslegers des Fahrzeugs automatisch freigegeben, teilweise freigegeben oder gesperrt werden.

Bei einem Fahrzeug, wie z.B. einer Autobetonpumpe, mit einer erfindungsgemäßen Abstützvorrichtung ist zweckmäßigerweise für jede der (typischerweise vier) Abstützvorrichtungen ein Querträger vorgesehen, der seitlich in Bezug auf das Fahrzeug ausfahrbar oder ausschwenkbar ist, insbesondere hydraulisch. Die seitliche Ausfahrbarkeit oder Ausschwenkbarkeit ist unerlässlich, um die Unterstützungsfläche über die (verkehrsrechtlich zulässige) Fahrzeugbreite hinaus zu vergrößern.

Ausführungsbeispiele der Erfindung werden im Folgenden anhand der Zeichnungen näher beschrieben.

Es zeigen:
- Figur 1: in einer Seitenansicht eine Abstützvorrichtung gemäß einem Ausführungsbeispiel der Erfindung in einem eingefahrenen Zustand;
- Figur 2: im Detail in einer Seitenansicht eine Stütze der in der Fig. 1 gezeigten Abstützvorrichtung;
- Figur 3: im Detail in einer Seitenansicht ein Außenrohr und einen darin angeordneten Hydraulikzylinder der in der Fig. 2 gezeigten Stütze;
- Figur 4: in einer Seitenansicht die in der Fig. 1 gezeigte Abstützvorrichtung mit der Stütze in einem ausgefahrenen Zustand;
- Figur 5: im Detail in einer Seitenansicht die ausgefahrene Stütze der in der Fig. 4 gezeigten Abstützvorrichtung; und
- Figur 6: im Detail in einer Seitenansicht das Außenrohr und den darin angeordneten Hydraulikzylinder in dem ausgefahrenen Zustand der Stütze;
- Figur 7: im Detail ein weiteres Ausführungsbeispiel mit einer alternativen Anordnung der Abstützvorrichtung am Ausleger;
- Figur 8: im Detail in einer Seitenansicht das Außenrohr mit darin angeordnetem Hydraulikzylinder gemäß einem weiteren Ausführungsbeispiel mit exzentrischem Lagerbolzen;
- Figur 9: Lagerbolzen mit exzentrischen Endabschnitten;
- Figur 10: im Detail in einer Seitenansicht das Außenrohr mit darin angeordnetem Hydraulikzylinder gemäß einem weiteren Ausführungsbeispiel mit exzentrischem Lagerbolzen und Getriebe zur Verstärkung der Hubbewegung;
- Figur 11: Seitenansicht eines weiteren Ausführungsbeispiels der erfindungsgemäßen Abstützung mit Getriebe zur Verstärkung der Hubbewegung;
- Figur 12: im Detail in einer Seitenansicht das Außenrohr mit darin angeordnetem Hydraulikzylinder gemäß noch einem weiteren Ausführungsbeispiel;
- Figur 13: im Detail in einer Draufsicht und einer Seitenansicht einen verlagerbaren Lagerbolzen gemäß einem weiteren Ausführungsbeispiel mit Lichtschranken als Näherungssensor.

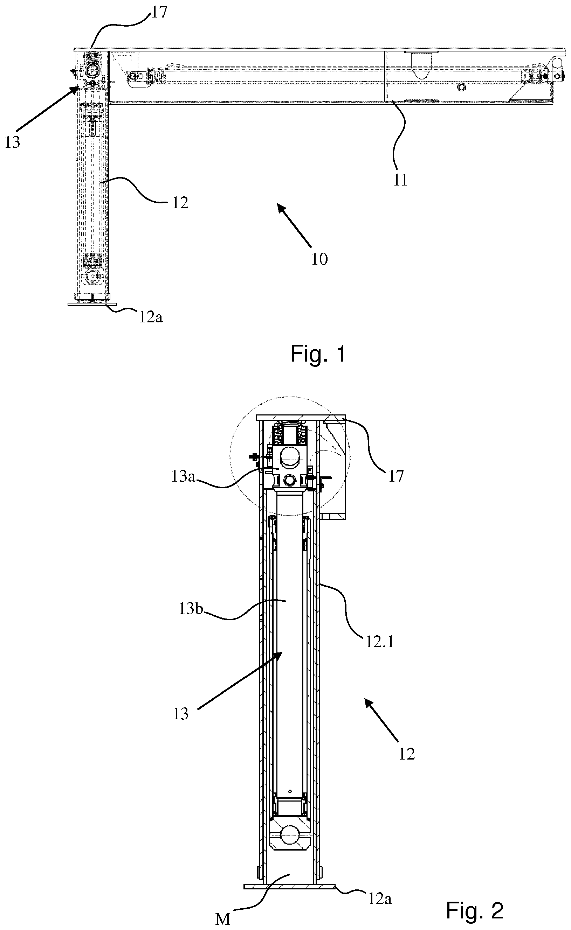

In der Fig. 1 ist eine Abstützvorrichtung 10 gezeigt, die einen Querträger 11 sowie eine Stütze 12 mit einem Stützfuß 12a und einen in der Stütze 12 angeordneten Hydraulikzylinder 13 aufweist. Der Querträger 11 ist an ein nicht dargestelltes Fahrzeug oder eine sonstige mobile Vorrichtung gekoppelt und seitlich ausfahrbar.

In der Fig. 2 ist die Stütze 12 gezeigt, die sich entlang einer Mittenlängsachse M erstreckt. Der Hydraulikzylinder 13 weist einen Zylinderkopf 13a und eine Kolbenstange 13b auf, wobei der Zylinderkopf 13a an einem Deckel 17 der Stütze 12 gelagert bzw. abgestützt ist. Die Stütze 12 weist ein Außenrohr 12.1 auf, welches mit dem Deckel 17 verbunden ist. Wie aus der Fig. 1 hervorgeht, ist der Deckel 17 durch einen Teil des Querträgers 11 gebildet und bildet ein Außenrohrschott an einem Ende des Außenrohrs 12.1. Der Deckel 17 kann z.B. aus einer Metallplatte bestehen

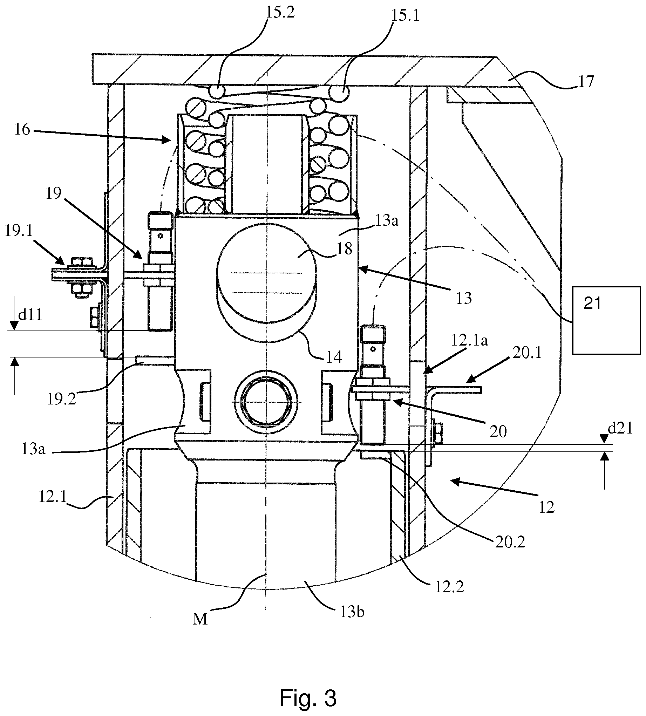

In der Fig. 3 ist die Anordnung des Außenrohrs 12.1 in Bezug auf den Deckel 17 und die Lagerung des Hydraulikzylinders 13 in dem Außenrohr 12.1 gezeigt. Der Zylinderkopf 13a weist ein Langloch 14 auf, durch das ein Lagerbolzen 18 geführt ist, wobei der Lagerbolzen 18 in dem Außenrohr 12.1 befestigt ist. Anstelle eines Langloches kann, z.B. bei einem Zylinderkopf mit einer Hohlbohrung, der Zylinderkopf 13a an seiner Außenmantelfläche zwei Langlöcher aufweisen. Der Zylinderkopf 13a ist relativ zu dem Lagerbolzen 18 beweglich in dem Langloch 14 geführt. An einem oberen Ende des Zylinderkopfes 13a ist eine Doppelrohrführung 16 vorgesehen, in welcher zwei Federelemente 15.1, 15.2 angeordnet sind, insbesondere zwei ineinander angeordnete zylindrische Schraubenfedern, von denen eines innen an einem inneren Rohr der Doppelrohrführung 16 und das andere innen an einem äußeren Rohr der Doppelrohrführung 16 geführt ist. Die Doppelrohrführung 16 ist als eine Rohr-in-Rohr-Anordnung ausgebildet. Die Federelemente 15.1, 15.2 sind in einem radialen Abstand zueinander angeordnet, berühren sich also nicht. Beide Federelemente 15.1, 15.2 stützen sich an dem Zylinderkopf 13a und an dem Deckel 17 ab. Bei den Federelementen 15.1, 15.2 handelt es sich um Druckfedern, die bewirken, dass der Zylinderkopf 13a nach unten verlagert wird und an einem oberen Anschlag der Langlöcher 14 zur Anlage kommt, solange kein Bodenkontakt des Stützfußes 12a besteht.

Innerhalb des Außenrohrs 12.1 ist eine Sensoreinrichtung 19 in Form eines Näherungsschalters angeordnet, der mittels Befestigungsmitteln 19.1 außen an dem Außenrohr 12.1 fixiert ist. Die Sensoreinrichtung 19 ist auf eine Messmarke 19.2 gerichtet, die an dem Zylinderkopf 13a fixiert ist und seitlich von dem Zylinderkopf 13a hervorsteht. In dem gezeigten Zustand ohne Bodenkontakt ist der entsprechende Abstand d11 maximal. Der Näherungsschalter spricht an, d.h. ändert seinen Schaltzustand, wenn der Abstand zwischen Näherungsschalter und Messmarke 19.2 einen bestimmten Wert über- bzw. unterschreitet. Damit spricht die Sensoreinrichtung 19 letztlich auf den Abstand des Hydraulikzylinders 13 zu dessen oberer Endlage an.

Die Stütze 12 ist nach unten ausfahrbar, indem ein Innenrohr 12.2 relativ zu dem Außenrohr 12.1 mittels des Hydraulikzylinders 13 nach unten verlagert wird. Um die eingefahrene Position des Innenrohrs 12.2 zu detektieren, ist innerhalb des Außenrohrs 12.1 eine zweite Sensoreinrichtung 20, ebenfalls in Form eines Näherungsschalters, vorgesehen, die auf eine Annäherung einer an dem Innenrohr 12.2 befestigten Messmarke 20.2 anspricht. In dem gezeigten eingefahrenen Zustand ist der entsprechende Abstand d21 minimal. Die zweite Sensoreinrichtung 20 ist mittels Befestigungsmitteln 20.1 an dem Außenrohr 12.1 befestigt. Die Befestigungsmittel 20.1 sind als T-förmige Winkelplatte ausgebildet, die durch eine Öffnung 12.1a des Außenrohrs geführt ist.

Die Sensoreinrichtungen 19, 20 sind mit einer Steuerungseinrichtung 21 verbunden, die dazu ausgebildet ist, eine oder mehrere Funktionen eines Fahrzeugs (nicht dargestellt) in Abhängigkeit von den Schaltzuständen der Sensoreinrichtungen 19, 20, d.h. von den detektierten Abständen d21 und d11 zu steuern. Insbesondere wird die Funktion eines Auslegers nur freigegeben, wenn die Sensoreinrichtung 19 detektiert, dass der Abstand d11 einen vorgegebenen Wert unterschreitet und gleichzeitig der Abstand d21 einen vorgegebenen Wert überschreitet.

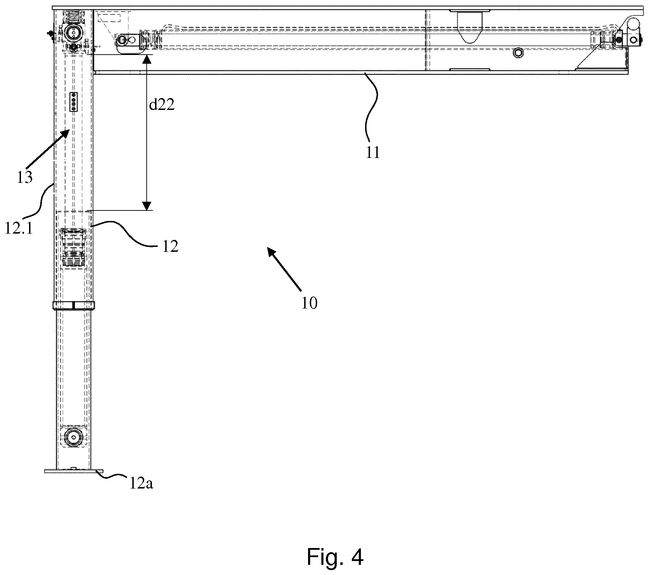

In der Fig. 4 ist die Stütze 12 in einem ausgefahrenen Zustand gezeigt, in dem der Abstand d22 einen größeren Betrag aufweist als in dem eingefahrenen Zustand. Der Stützfuß 12a ist gegenüber dem Außenrohr 12.1 nach unten verlagert worden.

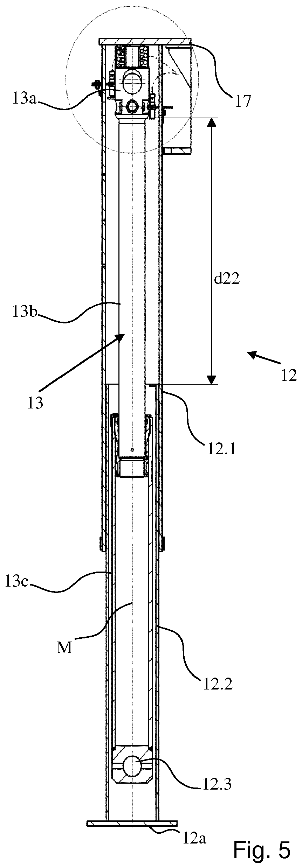

In der Fig. 5 ist im Detail gezeigt, dass das Innenrohr 12.2 in dem Außenrohr 12.1 geführt und seitlich stabilisiert ist, und dass ein Zylinderrohr bzw. ausfahrbarer Teleskopabschnitt 13c des Hydraulikzylinders 13 über einen Befestigungsbolzen 12.3 an dem Innenrohr 12.2 befestigt ist. Die Stützkraft wird von dem Stützfuß 12a auf das Innenrohr 12.2 und dem Zylinderrohr bzw. ausfahrbaren Teleskopabschnitt 13c übertragen, und von dort über die Kolbenstange 13b und den Lagerbolzen 18 auf das Außenrohr 12.1.

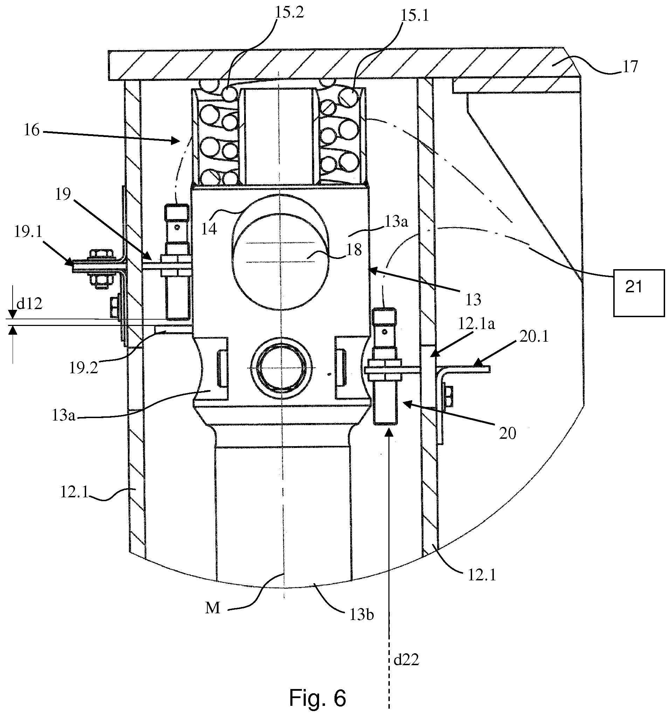

In der Fig. 6 liegt der Zylinderkopf 13a mit dem unteren Ende des Langlochs 14 an dem Lagerbolzen 18 an. Beide Federelemente 15.1, 15.2 sind komprimiert. Mit anderen Worten liegt ein Bodenkontakt vor, durch welchen eine hinreichend große Kraft auf die Kolbenstange 13b ausgeübt wird, dass beide Federelemente 15.1, 15.2 komprimiert werden. Der Abstand d12 zwischen der Messmarke 19.2 und der Bodenkontakt-Sensoreinrichtung 19 ist in diesem Zustand minimal. Der Verlagerungsweg des Zylinderkopfes 13a relativ zu dem Lagerbolzen 18 entspricht dem Betrag, um welchen die Länge der Langlöcher 14 größer ist als der Durchmesser der Langlöcher bzw. des Lagerbolzens 18.

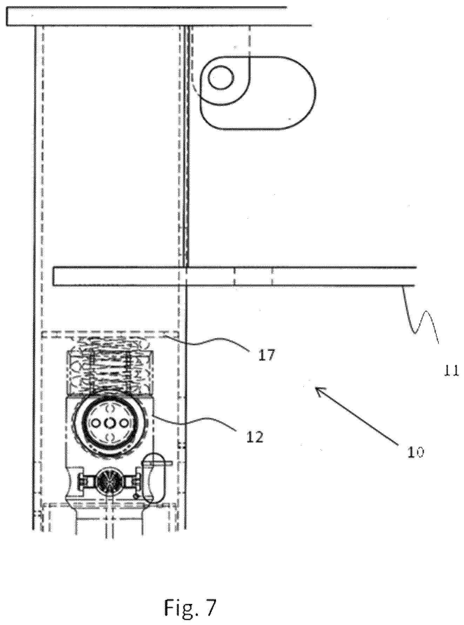

In den Figuren 1-6 bildet der obere Bereich des Stützauslegers gleichzeitig die Platte 17, an der sich die Feder 15 bzw. Federn 15.1 und 15.2 abstützen. Fig. 7 zeigt eine Alternative zu dieser Anordnung, bei der die Abdeckplatte 17 tiefer innerhalb des Stützauslegers angeordnet ist.

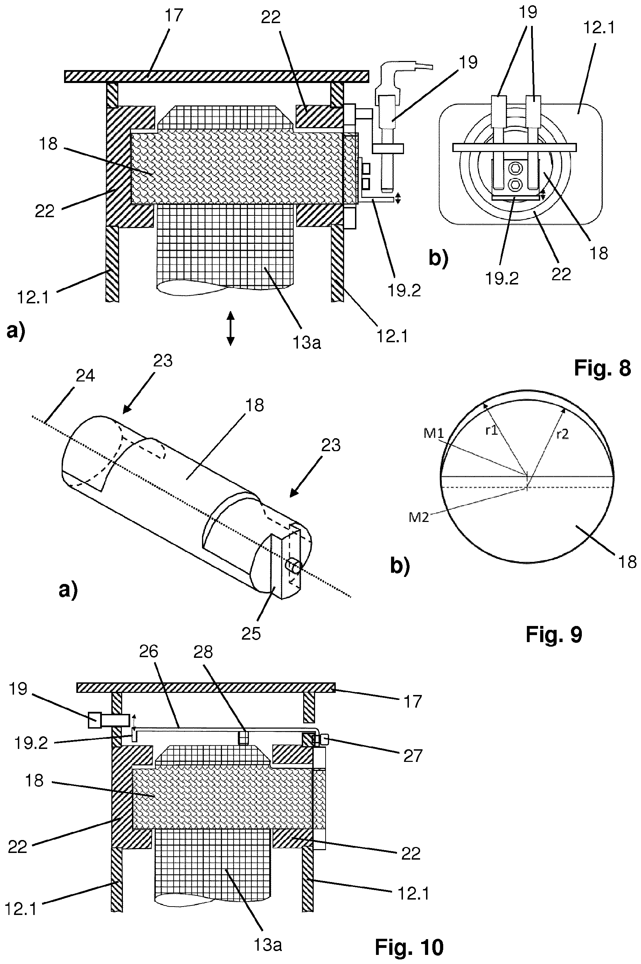

Die Figur 8 zeigt im Detail in einer Seitenansicht ein weiteres Ausführungsbeispiel. Wie die Figur 8a zeigt, sind mit dem Außenrohr 12.1 Lagerbuchsen 22 verbunden, die den Lagerbolzen 18 in Lagerbohrungen aufnehmen. Außerdem ist der Lagerbolzen 18 in einer Lagerbohrung am Zylinderkopf 13a des Hydraulikzylinders 13 gelagert.

Figur 9a zeigt eine dreidimensionale Ansicht des Lagerbolzens 18 in einer möglichen Ausführungsform. Der Lagerbolzen 18 ist in seinen Endabschnitten 23, in denen er in den Lagerbohrungen an der Stütze 12 gelagert ist, abgedreht, so dass er dort den in Figur 9b dargestellten, bezüglich der Achse 24 des Lagerbolzens 18 nicht rotationssymmetrischen, und zwar exzentrischen Querschnitt aufweist. Wie die Figur 9b zeigt, hat der Bolzen einen Radius r1 vom Mittelpunkt M1 des Bolzens aus gesehen und im abgedrehten Bereich 23 einen Radius r2, betrachtet von einem mit Abstand darunter liegenden Mittelpunkt M2 aus, wobei der Radius r1 gleich dem Radius r2 ist. Der Radius r1 bzw. r2 entspricht dem Radius der kreisrunden Lagerbohrung. Dadurch ist der Lagerbolzen 18 in den Lagerbuchsen 22 vertikal verlagerbar und der Hydraulikzylinder 13 erhält seine vertikale Beweglichkeit, wie in Figur 8a durch den Doppelpfeil angedeutet.

Die Ober- und Unterseite des asymmetrischen Querschnitts des Lagerbolzens 18 definieren die oberen und unteren Endlagen der Relativbewegung von Stütze 12 und Hydraulikzylinder 13. Um den Anpressdruck des Lagerbolzens 18 an den Innenlaibungen der Lagerbohrungen unter Belastung so gering wie möglich zu halten, insbesondere um eine linienförmige Krafteinleitung zu vermeiden, ist die Außenkontur des Lagerbolzens 18, wie weiter oben beschrieben, in den abgedrehten Endabschnitten 23 an die Innenkontur der jeweiligen Lagerbohrung angepasst. Der Lagerbolzen 18 ist an der Stütze 12 verdrehsicher geführt. Hierzu dient ein Führungsvorsprung 25 mit vertikalen Führungsflächen. Wie die Figuren 8a und 8b zeigen, ist an einem Ende des Lagerbolzens 18 eine Messmarke 19.2 angeordnet, deren Verlagerungsbewegung relativ zur Stütze 12 redundant mittels zweier Näherungsschalter 19 registriert wird, um so im Sinne der Erfindung ein stützlastabhängiges Signal zu erzeugen, wenn der Abstand des Hydraulikzylinders 13 zu seiner oberen Endlage einen vorgegebenen Wert unter- oder überschreitet. Die zwei Näherungsschalter 19 können auch einander gegenüberliegend, d.h. ober- und unterhalb der Messmarke 19.2 positioniert sein, um die Messsicherheit und Redundanz weiter zu erhöhen, weil dann die zwei Näherungsschalter jeweils ein unterschiedliches Messsignal erhalten.

Wie anhand der Figur 8 zu erkennen ist, ist der Gesamthub der Verlagerung des Hydraulikzylinders 13 relativ zur Stütze 12 zwischen den beiden Endlagen bei dem dargestellten Ausführungsbeispiel vergleichsweise gering. Er beträgt nur wenige Millimeter. Dies beeinträchtigt die Genauigkeit und Zuverlässigkeit bei der Erzeugung des stützlastabhängigen Signals mittels der Näherungsschalter 19. Um die Genauigkeit und Zuverlässigkeit der Detektion zu verbessern, ist bei dem in Figur 10 dargestellten Ausführungsbeispiel ein mit dem Näherungsschalter 19 zusammenwirkendes Getriebe vorgesehen, das den Hub der Relativbewegung von Hydraulikzylinder 13 und Stütze 12 verstärkt. Das Getriebe ist ein Hebelgetriebe mit einem Hebel 26 in Form eines abgekanteten Blechs, das mittels einer Schraube 27 am Außenrohr 12.1 befestigt ist. Aufgrund seiner elastischen Eigenschaften ist der Hebel 26 um seinen Anlenkpunkt am Außenrohr 12.1 drehbar. Die Hubbewegung überträgt der Zylinderkopf 13a an einem Angriffspunkt 28 auf den Hebel 26. An dem weiter als der Angriffspunkt 28 vom Drehpunkt des Hebels entfernten Ende des Hebels 26 ist eine Messmarke 19.2 angeordnet, deren Bewegung mittels des Näherungsschalters 19 erfasst wird. Aufgrund des längeren Hebelarms bewegt sich die Messmarke 19.2 bei einer Verlagerung des Hydraulikzylinders 13 relativ zur Stütze 12 stärker als bei dem in Figur 8 dargestellten Ausführungsbeispiel. Der Näherungsschalter 19 spricht dabei auf eine Annäherung der am Hebel 26 angeordneten Messmarke 19.2 an und detektiert somit die Bewegung zuverlässiger. Zur Erhöhung der Messsicherheit / Redundanz wäre es hier auch möglich, einen zweiten Näherungsschalter unterhalb des Näherungsschalters 19 zu verwenden, der den Zylinderkopf 13a zusätzlich im nicht angehobenen Zustand detektiert.

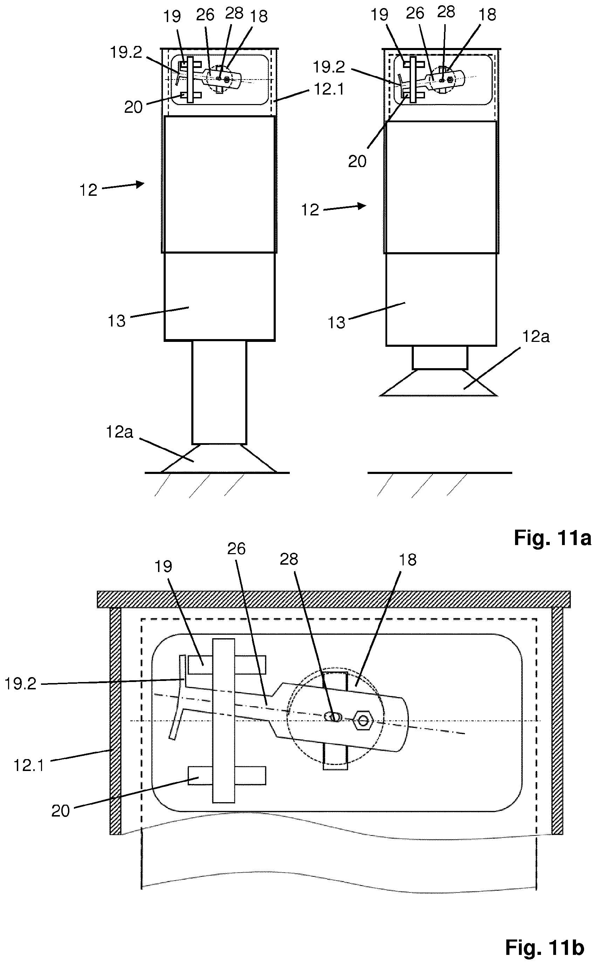

Eine alternative Ausgestaltung mit Getriebe zur Verstärkung des Hubs der Relativbewegung zeigt die Figur 11. In Figur 11a ist links die Stütze 12 mit abgesenktem Stützfuß 12a und rechts mit angehobenem Stützfuß 12a dargestellt. Bei diesem Ausführungsbeispiel kommt der exzentrische Lagerbolzen 18, der die in Figur 9 dargestellte Ausgestaltung hat, wie bei den Ausführungsbeispielen der Figuren 8 bis 10 zum Einsatz. Der Lagerbolzen 18 gemäss dem Ausführungsbeispiel in Figur 8 hat, insofern abweichend von der Darstellung in Figur 9, an seinem vorderen Ende in dem Führungsvorsprung 25 zwei Gewindebohrungen zum Befestigen der Messmarke 19.2, während der Lagerbolzen in Fig.9a am Führungsvorsprung 25 einen Angriffspunkt 28 aufweist. Das Getriebe ist wiederum ein Hebelgetriebe, mit einem an dem Außenrohr 12.1 drehbar gelagerten Hebel 26, wobei der Hebel 26 an dem Angriffspunkt 28 mit dem vertikal in den Lagerbohrungen der Stütze 12 verlagerbaren Lagerbolzen 18 verbunden ist. Eine Messmarke 19.2 ist am Ende des Hebels 26 angeordnet. Diese nähert sich bei Absenken des Stützfußes 12a dem oberen Näherungsschalter 19 (linke Darstellung) und bei Anheben des Stützfußes 12a dem unteren Näherungsschalter 20 (rechte Darstellung). Das Absenken des Stützfußes 12a kann bei diesem Ausführungsbeispiel zuverlässig (redundant) detektiert werden, wenn, wie in der linken Darstellung der Figur 11a, der obere Näherungsschalter 19 die Annäherung der Messmarke 19.2 detektiert und ein entsprechendes Signal erzeugt, während gleichzeitig der untere Näherungsschalter 20, von dem die Messmarke 19.2 entfernt ist, kein Signal erzeugt. Die Figur 11b zeigt zur besseren Erkennbarkeit im Detail das Getriebe bei abgesenktem Stützfuß 12a gemäß der linken Darstellung der Figur 11a.

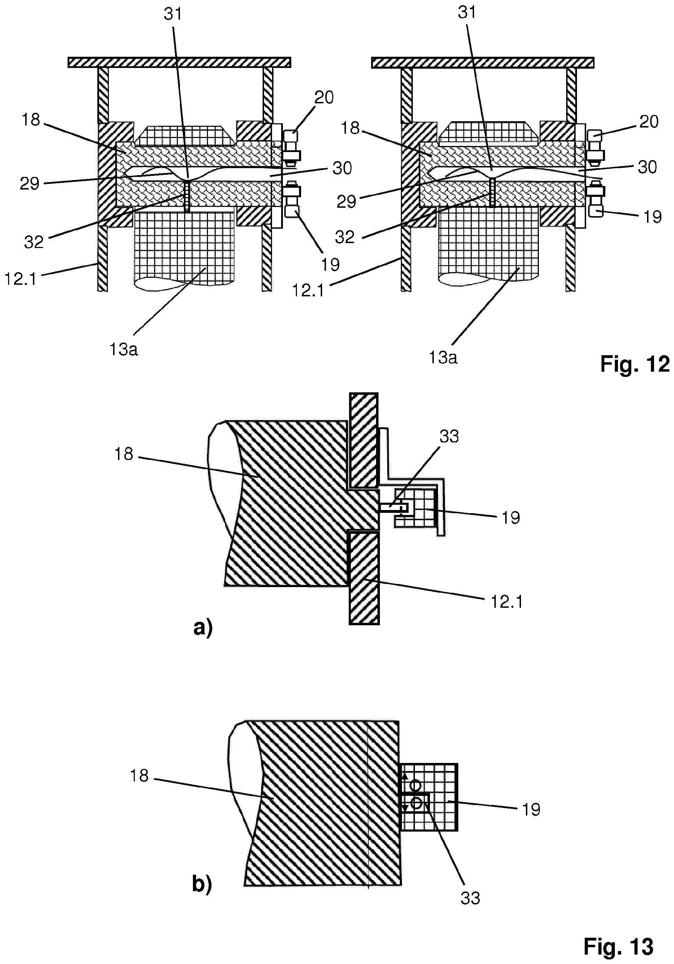

Bei dem in Figur 12 dargestellten Ausführungsbeispiel weist der Lagerbolzen 18 in einem mittleren Abschnitt, in dem er in der Lagerbohrung am Zylinderkopf 13a gelagert ist, einen bezüglich der Achse des Lagerbolzens 18 exzentrischen Querschnitt auf. Der Lagerbolzen ist im Bereich der Lagerbohrung am Zylinderkopf 13a an der Oberseite abgedreht, so dass sich dort ein Querschnitt ergibt, der dem Querschnitt des in Figur 9 dargestellten Lagerbolzens 18 in den Endabschnitten entspricht. Die vertikale Verlagerbarkeit des Hydraulikzylinders 13 relativ zur Stütze 12 resultiert hier aus der Verlagerbarkeit des Lagerbolzens 18 in der Lagerbohrung am Zylinderkopf 13a. Auch bei dem Ausführungsbeispiel der Figur 12 ist ein Getriebe zur Verstärkung des Hubs der Relativbewegung vorgesehen. Dieses umfasst eine Blattfeder 29, die zwei oder mehrfach (bei dem Ausführungsbeispiel dreifach) entlang ihrer Längserstreckung gebogen ist und sich mit ihren Biegestellen an der Innenwandung einer axialen Bohrung 30 im Lagerbolzen 18 abstützt. Das Ende der Blattfeder 29 ragt aus der Bohrung 30 an einem Ende des Lagerbolzens 18 heraus und dient als Messmarke, deren Bewegung mittels zweier bezüglich der Blattfeder 29 einander gegenüberliegender Näherungsschalter 19, 20 registriert wird. Auf die Blattfeder 29 wirkt an einem Angriffspunkt 31 im Inneren der Bohrung 30 ein radial im Lagerbolzen 18 geführter Stößel 32 auf die Blattfeder 29 ein. Mit angehobenem Stützfuß 12a (linke Darstellung) bewegt die Schwerkraft den Hydraulikzylinder 13 und damit den Zylinderkopf 13a nach unten. Der Stößel 32 ist entsprechend nach unten ausgefahren. Die Blattfeder 29 nimmt eine Form ein, in der sich das freie Ende der Blattfeder 29 maximal dem oberen Näherungsschalter 20 annähert. Mit abgesenktem Stützfuß 12a (rechte Darstellung) wird der Zylinderkopf 13a nach oben bewegt, wodurch der Stößel 32 in den Lagerbolzen 18 eingeschoben wird. Dabei verformt sich die Blattfeder 29, so dass sich deren als Messmarke verwendetes freies Ende maximal dem unteren Näherungsschalter 19 annähert. Anhand der Signale der gegenläufig ansprechenden Näherungsschalter 19, 20 kann zuverlässig und redundant das Absenken und Aufsetzen des Stützfußes 12a auf dem Boden detektiert werden.

Bei dem in Figur 13 schematisch gezeigten Ausführungsbeispiel kommt als Näherungsschalter 19 eine Lichtschranke zum Einsatz. Die Figur 13a zeigt eine Draufsicht, während die Figur 13b eine Seitenansicht zeigt. Mit dem Lagerbolzen 18, der z.B. wie in den Ausführungsbeispielen der Figuren 8 bis 11 ausgestaltet ist, ist ein Sperrelement 33 verbunden, dass in der oberen Endlage des Hydraulikzylinders 13 und damit des Lagerbolzens 18 einen oberen Lichtstrahlweg 34 und in der unteren Endlage einen unteren Lichtstrahlweg 35 der Lichtschranke versperrt, so dass die jeweiligen Endlagen zuverlässig detektierbar sind.

## Patentansprüche

1. Abstützvorrichtung (10) zum Abstützen einer mobilen Vorrichtung, insbesondere eines Fahrzeugs, am Boden, mit
- einer mit der mobilen Vorrichtung verbundenen Stütze (12),
- einem an der Stütze (12) gelagerten Hydraulikzylinder (13), der relativ zu der Stütze (12) zwischen einer oberen und einer unteren Endlage verlagerbar ist,
- einem mittels des Hydraulikzylinders (13) absenk- und anhebbaren Stützfuß (12a), und
- einer Sensoreinrichtung (19), die ein stützlastabhängiges Signal erzeugt,
**dadurch gekennzeichnet, dass** die Sensoreinrichtung (19) das stützlastabhängige Signal mittels eines Näherungsschalters erzeugt, der anspricht, wenn der Abstand des Hydraulikzylinders (13) zu seiner oberen Endlage einen vorgegebenen Wert unter- oder überschreitet.

2. Abstützvorrichtung nach Anspruch 1, **dadurch gekennzeichnet, dass** der Näherungsschalter berührungslos arbeitet.

3. Abstützvorrichtung nach Anspruch 1 oder 2, **dadurch gekennzeichnet, dass** die Stütze (12) ein Außenrohr (12.1) umfasst, das sich entlang einer Mittenlängsachse (M) erstreckt, wobei der Hydraulikzylinder (13) innerhalb des Außenrohres (12.1) verlagerbar angeordnet ist.

4. Abstützvorrichtung nach einem der Ansprüche 1 bis 3, **dadurch gekennzeichnet, dass** der Näherungsschalter an der Stütze, vorzugsweise am Außenrohr (12.1) befestigt ist und auf eine Annäherung einer am Hydraulikzylinder (13) angeordneten Messmarke (19.2) anspricht.

5. Abstützvorrichtung nach einem der Ansprüche 1 bis 4, **dadurch gekennzeichnet, dass** der Hydraulikzylinder (13) über einen Lagerbolzen (18) an der Stütze (12) gelagert ist, wobei der Lagerbolzen (18) in Lagerbohrungen an der Stütze (12) und am Zylinderkopf (13a) des Hydraulikzylinders (13) gelagert ist.

6. Abstützvorrichtung nach Anspruch 5, **dadurch gekennzeichnet, dass** die Lagerbohrung am Zylinderkopf (13a) als Langloch (14) ausgebildet ist.

7. Abstützvorrichtung nach Anspruch 5, **dadurch gekennzeichnet, dass** der Lagerbolzen (18) in seinen Endabschnitten (23), in denen er in den Lagerbohrungen an der Stütze (12) gelagert ist, einen bezüglich der Achse (24) des Lagerbolzens (18) nicht rotationssymmetrischen, vorzugsweise exzentrischen Querschnitt aufweist.

8. Abstützvorrichtung nach Anspruch 5, **dadurch gekennzeichnet, dass** der Lagerbolzen (18) in einem mittleren Abschnitt, in dem er in der Lagerbohrung am Zylinderkopf (13a) gelagert ist, einen bezüglich der Achse (24) des Lagerbolzens (18) nicht rotationssymmetrischen, vorzugsweise exzentrischen Querschnitt aufweist.

9. Abstützvorrichtung nach Anspruch 7 oder 8, **dadurch gekennzeichnet, dass** die Lagerbohrung am Zylinderkopf (13a) und/oder die Lagerbohrungen an der Stütze (12) kreisrund sind.

10. Abstützvorrichtung nach Anspruch 9, **dadurch gekennzeichnet, dass** der Lagerbolzen (18) in der Lagerbohrung am Zylinderkopf (13a) und/oder in den Lagerbohrungen an der Stütze (12.1) verdrehsicher geführt ist.

11. Abstützvorrichtung nach einem der Ansprüche 1 bis 10, **gekennzeichnet durch** ein mit der Sensoreinrichtung (19) zusammenwirkendes Getriebe, das den Hub der Relativbewegung von Hydraulikzylinder (13) und Stütze (12) verstärkt.

12. Abstützvorrichtung nach einem der Ansprüche 1 bis 11, **gekennzeichnet durch** ein Federelement (15.1, 15.2), das sich an der Stütze (12) abstützt und eine zum Boden hin gerichtete Federkraft auf den Hydraulikzylinder (13) ausübt.

13. Abstützvorrichtung nach Anspruch 12, **gekennzeichnet durch** ein weiteres Federelement (15.1, 15.2), wobei die Federelemente in einer Doppelrohrführung (16) um die Mittenlängsachse (M) angeordnet sind.

14. Abstützvorrichtung nach einem der vorhergehenden Ansprüche, **dadurch gekennzeichnet, dass** die Abstützvorrichtung (10) eine weitere Sensoreinrichtung (20) aufweist, die ein Signal erzeugt, wenn der Stützfuß (12a) angehoben ist.

15. Abstützvorrichtung nach einem der Ansprüche 1 bis 14, **dadurch gekennzeichnet, dass** die Abstützvorrichtung eine Steuerungseinrichtung (21) aufweist, welche dazu ausgebildet ist, in Abhängigkeit von dem Signal der Sensoreinrichtung (19, 20) einen Ausleger der mobilen Vorrichtung zu steuern.

16. Mobile Vorrichtung, insbesondere Fahrzeug, mit einer Abstützvorrichtung (10) nach Anspruch 15, wobei die mobile Vorrichtung einen Aktuator zum Betätigen eines Auslegers der mobilen Vorrichtung aufweist, welcher mit der Steuerungseinrichtung (21) der Abstützvorrichtung (10) gekoppelt ist.

## Claims

1. A supporting device (10) for supporting a mobile device, in particular a vehicle, on the ground, comprised of
- a support (12) connected to the mobile device,
- a hydraulic cylinder (13), which is supported on the support (12) and which can be moved between an upper end position and a lower end position in relation to the support (12),
- a supporting foot (12a), which can be lowered and raised by means of the hydraulic cylinder (13), and
- a sensing device (19), which produces a supporting-load-dependent signal,
**characterized in that** the sensing device (19) produces the supporting-load-dependent signal by means of a proximity switch which responds when the distance of the hydraulic cylinder (13) from its upper end position falls below or exceeds a specified value.

2. A supporting device according to claim 1, **characterized in that** the proximity switch works contactless.

3. A supporting device according to claim 1 or 2, **characterized in that** the support (12) comprises an exterior pipe (12.1) which extends along a central longitudinal axis, with the hydraulic cylinder (13) being shiftably arranged within the exterior pipe (12.1).

4. A supporting device according to any of the preceding claims 1 to 3, **characterized in that** the proximity switch is fastened to the support, preferably to the exterior pipe (12.1) and responds to an approach of a measuring mark (19.2) arranged on the hydraulic cylinder (13).

5. A supporting device according to any of the preceding claims 1 to 4, **characterized in that** the hydraulic cylinder (13) is supported via a bearing bolt (18) on the support (12), with the bearing bolt (18) being supported in bearing bores on the support (12) and on the cylinder head (13a) of the hydraulic cylinder (13).

6. A supporting device according to claim 5, **characterized in that** the bearing bore at the cylinder head (13a) is configured as an oblong hole (14).

7. A supporting device according to claim 5, **characterized in that** the bearing bolt (18) in its end section (23) where it is supported in the bearing bores on the support (12) has a cross-section which relative to the axis (24) of the bearing bolt (18) is non-rotation-symmetrical, preferably eccentric.

8. A supporting device according to claim 6, **characterized in that** the bearing bolt (18) in a central section where it is supported in the bearing bore on the cylinder head (13a) has a cross-section which relative to the axis (24) of the bearing bolt (18) is non-rotation-symmetrical, preferably eccentric.

9. A supporting device according to claim 7 or 8, **characterized in that** the bearing bore on the cylinder head (13a) and/or the bearing bores on the support (12) are circular.

10. A supporting device according to claim 9, **characterized in that** the bearing bolt (18) in the bearing bore on the cylinder head (13a) and/or in the bearing bores on the support (12.1) is guided in a torque-proof manner.

11. A supporting device according to any of the preceding claims 1 to 10, **characterized by** a gearbox co-acting with the sensing device (19), the said gearbox intensifying the stroke of the relative movement of the hydraulic cylinder (13) and support (12).

12. A supporting device according to any of the preceding claims 1 to 11, **characterized by** a spring element (15.1, 15.2) which supports on the support (12) and which exerts a spring force on the hydraulic cylinder (13) directed towards the ground.

13. A supporting device according to claim 12, **characterized by** a further spring element (15.1, 15.2), with the spring elements being arranged in a double-pipe guidance (16) about the central longitudinal axis (M).

14. A supporting device according to any of the preceding claims, **characterized in that** the supporting device (10) comprises a further sensing device which produces a signal when the support foot (12a) has been raised.

15. A supporting device according to any of the preceding claims 1 to 14, **characterized in that** the supporting device comprises a control facility (21) which is suitably configured to control a boom of the mobile device depending on the signal from the sensing device (19, 20).

16. A mobile device, in particular a vehicle, comprising a supporting device (10) according to claim 15, wherein the mobile device comprises an actuator to actuate a boom of the mobile device, said actuator being coupled to the control facility (21) of the supporting device (10).

## Revendications

1. Dispositif de stabilisation (10) pour stabiliser un dispositif mobile, en particulier un véhicule, sur le sol, comprenant
- un support (12) connecté au dispositif mobile,
- un vérin hydraulique (13) supporté sur le support (12), qui peut être déplacé par rapport au support (12) entre une position d'extrémité supérieure et une position d'extrémité inférieure,
- une base de support (12a) pouvant être abaissée et levée au moyen du vérin hydraulique (13), et
- un dispositif de capteur (19) qui génère un signal dépendant de la charge d'appui,
**caractérisé en ce que**
le dispositif de capteur (19) génère le signal dépendant de la charge d'appui au moyen d'un commutateur de proximité qui réagit lorsque la distance du vérin hydraulique (13) à sa position d'extrémité supérieure est en dessous d'une valeur prédéfinie ou dépasse celle-ci.

2. Dispositif de stabilisation selon la revendication 1, **caractérisé en ce que** le commutateur de proximité fonctionne sans contact.

3. Dispositif de stabilisation selon la revendication 1 ou 2, **caractérisé en ce que** le support (12) comprend un tube extérieur (12.1) qui s'étend le long d'un axe médian longitudinal (M), le vérin hydraulique (13) étant disposé de manière déplaçable à l'intérieur du tube extérieur (12.1).

4. Dispositif de stabilisation selon l'une quelconque des revendications 1 à 3, **caractérisé en ce que** le commutateur de proximité est fixé au support, de préférence au tube extérieur (12.1) et réagit à un rapprochement d'une marque de mesure (19.2) disposée sur le vérin hydraulique (13).

5. Dispositif de stabilisation selon l'une quelconque des revendications 1 à 4, **caractérisé en ce que** le vérin hydraulique (13) est supporté par le biais d'un boulon de palier (18) sur le support (12), le boulon de palier (18) étant supporté dans des alésages de palier sur le support (12) et sur la culasse (13a) du vérin hydraulique (13).

6. Dispositif de stabilisation selon la revendication 5, **caractérisé en ce que** l'alésage de palier sur la culasse (13a) est réalisé sous forme de trou oblong (14).

7. Dispositif de stabilisation selon la revendication 5, **caractérisé en ce que** le boulon de palier (18), dans ses portions d'extrémité (23) dans lesquelles il est supporté dans les alésages de palier sur le support (12), présente une section transversale sans symétrie de révolution par rapport à l'axe (24) du boulon de palier (18), de préférence une section transversale excentrique.

8. Dispositif de stabilisation selon la revendication 5, **caractérisé en ce que** le boulon de palier (18), dans une portion centrale dans laquelle il est supporté dans l'alésage de palier sur la culasse (13a), présente une section transversale sans symétrie de révolution par rapport à l'axe (24) du boulon de palier (18), de préférence une section transversale excentrique.

9. Dispositif de stabilisation selon la revendication 7 ou 8, **caractérisé en ce que** l'alésage de palier sur la culasse (13a) et/ou les alésages de palier sur le support (12) sont circulaires.

10. Dispositif de stabilisation selon la revendication 9, **caractérisé en ce que** le boulon de palier (18) dans l'alésage de palier au niveau de la culasse (13a) et/ou dans les alésages de palier au niveau du support (12.1) est guidé de manière solidaire en rotation.

11. Dispositif de stabilisation selon l'une quelconque des revendications 1 à 10, **caractérisé par** un mécanisme coopérant avec le dispositif de capteur (19), qui renforce la course du mouvement relatif du vérin hydraulique (13) et du support (12).

12. Dispositif de stabilisation selon l'une quelconque des revendications 1 à 11, **caractérisé par** un élément de ressort (15.1, 15.2) qui s'appuie sur le support (12) et qui exerce une force de ressort orientée vers le sol sur le vérin hydraulique (13).

13. Dispositif de stabilisation selon la revendication 12, **caractérisé par** un élément de ressort supplémentaire (15.1, 15.2), les éléments de ressort étant disposés dans un guide à double tube (16) autour de l'axe médian longitudinal (M).

14. Dispositif de stabilisation selon l'une quelconque des revendications précédentes, **caractérisé en ce que** le dispositif de stabilisation (10) présente un dispositif de capteur supplémentaire (20) qui génère un signal lorsque la base de support (12a) est soulevée.

15. Dispositif de stabilisation selon l'une quelconque des revendications 1 à 14, **caractérisé en ce que** le dispositif de stabilisation présente un dispositif de commande (21) qui est réalisé de manière à commander un cantilever du dispositif mobile en fonction du signal du dispositif de capteur (19, 20).

16. Dispositif mobile, en particulier véhicule, comprenant un dispositif de stabilisation (10) selon la revendication 15, le dispositif mobile présentant un actionneur pour actionner un cantilever du dispositif mobile, qui est accouplé au dispositif de commande (21) du dispositif de stabilisation (10).
